(19) Europäisches Patentamt
European Patent Office
Office européen des brevets

(11) **EP 2 575 388 A1**

(12) **EUROPEAN PATENT APPLICATION**

(43) Date of publication:
**03.04.2013 Bulletin 2013/14**

(51) Int Cl.:
**H04W 16/28** (2009.01)

(21) Application number: **11306239.2**

(22) Date of filing: **28.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Alcatel Lucent**
**75007 Paris (FR)**

(72) Inventors:
• **Stanze, Oliver**
**70499 Stuttgart (DE)**
• **Halbauer, Hardy**
**76275 Ettlingen (DE)**
• **Gerlach, Christian**
**71254 Stuttgart (DE)**
• **Cesar, Bozo**
**70439 Stuttgart (DE)**

(74) Representative: **Wetzel, Emmanuelle**
**Alcatel Lucent**
**Intellectual Property & Corporate Standards**
**Lorenzstrasse 10**
**70435 Stuttgart (DE)**

(54) **Method for adapting an antenna downtilt in a radio communication network, first network node and second network nodethereof**

(57)    The invention relates to a method for adapting an antenna downtilt in a radio communication network (RCN). The radio communication network (RCN) comprises a first transmission apparatus for transmitting first radio frequency signals and at least one second transmission apparatus for transmitting second radio frequency signals. The first transmission apparatus comprises a first antenna system (BS1-AS1). The method comprises the step of adapting a downtilt angle (DTA1) at the first antenna system (BS1-AS1) for transmitting the first radio frequency signals depending on an operating condition of the at least second transmission apparatus. The invention further relates to a network node (BS1) for use in a radio communication network (RCN) and to a base station (BS2) for use in a radio communication network (RCN).

FIG. 1

**Description**

**FIELD OF THE INVENTION**

The invention relates to radio communication and, more particularly but not exclusively, to adapting an antenna downtilt in a radio communication network.

**BACKGROUND**

Conventional radio communication networks such as cellular radio communication networks based on 3GPP standards (3GPP = 3rd Generation Partnership Project) have been installed in the past with several hundreds or thousands of so-called macro base stations with more or less a same maximum transmission power. Recently, more and more low power base stations such as pico base stations are going to be installed in so-called hotspot areas and provide a wireless coverage restricted to these areas. Hotspot areas require many radio resources in a small area due to huge data traffic generated by many people coming together at certain places such as pedestrian areas, sports venues, market places. It is assumed for example by the 3GPP standardization organization that a transmission apparatus of a macro base station provides an output power of 46 dBm (equal to 40 W) and a transmission apparatus of a pico base station may provide an output power of 30 dBm (equal to 1 W) in urban areas or an output power of 37 dBm (equal to 5 W) in rural areas.

For economical reasons (e.g. reducing CAPEX) and for environmental reasons (e.g. reducing Carbon dioxide emission) there is a high demand on reducing electrical power consumption in radio communication networks.

**SUMMARY**

The way of performing power saving schemes in a radio communication network has an impact on the radio coverage and the interference situation within the radio communication network.

Therefore, it is an object of the invention to provide efficient radio coverage and an optimized data throughput in the radio communication network in combination with power saving schemes.

The object is achieved by a method for adapting an antenna downtilt in a radio communication network. The radio communication network comprises a first transmission apparatus for transmitting first radio frequency signals and a second transmission apparatus for transmitting second radio frequency signals. The first transmission apparatus comprises a first antenna system. The method comprises the step of adapting a downtilt angle at the first antenna system for transmitting the first radio frequency signals depending on an operating condition of the second transmission apparatus.

The object is further achieved by a network node for use in a radio communication network and by a base station for use in a radio communication network.

The network node may be for example a base station, preferably a so-called macro base station of the radio communication network or a network server responsible for interference coordination between base stations of the radio communication network.

The base station may be for example a low power base station, preferably a pico base station.

The method according to the present invention offers a first benefit of reducing an interference of the first radio frequency signals transmitted from the first antenna system to the second radio frequency signals transmitted from the second transmission apparatus, if for example the second transmission apparatus is activated. The second transmission apparatus may be for example activated, if a distribution of mobile stations and/or a network load at a location of the second transmission apparatus increases drastically.

The method also offers a second benefit of providing wireless coverage by the first antenna system to an area, which was previously covered by a second antenna system of the second transmission apparatus, if for example the second antenna system is deactivated due to a decrease of mobile stations and/or network load at the location of the second transmission apparatus.

The method offers a third benefit of increasing an overall system performance with reduced energy consumption by avoiding coverage gaps and by reducing interference within the radio communication network. The interference can be reduced, because the overlap between neighbouring radio cells can be limited and controlled by the downtilt angles for downlink radio frequency signals, which are transmitted by the transmission apparatus of the radio communication network.

In a preferred embodiment, a first base station comprises the first transmission apparatus, a second base station comprises the second transmission apparatus, the first transmission apparatus is adapted for providing wireless coverage for a first coverage area, the second transmission apparatus is adapted for providing wireless coverage for a second coverage area, and the second base station is placed within a maximum extension of the first coverage area of the first base station. The preferred embodiment allows applying the second base station to provide additional wireless coverage for a part of the first coverage area of the first base station, if there is a high traffic load. If there is low traffic load, the coverage area can be completely served by the first base station on its own. In a further preferred embodiment, the first base station is a macro base station, which provides a first maximum output power and the second base station is a pico base station, which provides a second maximum output power smaller than the first maximum output power. Thereby, the pico base station may be placed within a maximum coverage area of the macro base station and the pico base station can assist the macro base station within a part of the maximum coverage area, if there is high load within a radio cell or a radio sector of the macro base station.

In an even further preferred embodiment, the method may further comprise the step of providing from the second base station information of the operating condition of the second transmission apparatus or the second base station to the first base station. This allows to adapt the first antenna system in a fast way, because no measurements are required, which may be performed for example by the first antenna system or by mobile stations located within the first coverage area, to get knowledge of a change of the operating condition at the second transmission apparatus, which impacts a range of the second radio frequency signals or an interference of the second radio frequency signals with respect to the first radio frequency signals. The information can be immediately applied to determine the downtilt angle for the first antenna system.

The information may comprise for example an activation state of the second transmission apparatus or of the second base station or a deactivation state of the second transmission apparatus or of the second base station, and/or one or several downlink transmission parameters for transmitting the second radio frequency signals from the second transmission apparatus.

The one or several downlink transmission parameters may be for example a transmit power value and/or a downtilt angle and/or a range of coverage.

In a further preferred embodiment, the method may further comprises the step of controlling the operating condition of the second transmission apparatus of the second base station by the first base station. This provides a benefit of controlling any change of the operating condition not by the second base station itself but by the first base station in a master slave relation with the first base station as a master and the second base station as a slave. There might be for example a situation, in which the first base station is not able to change the downtilt angle without considerable performance loss, if suddenly the second base station reduces for example the transmission power or deactivate the second transmission apparatus. In such a case a change of the operating condition will not be performed or will be delayed until for example a distribution of mobile stations within the first coverage area or a traffic load at the first antenna system allows for a change of the downtilt angle without considerable impact on performance of the radio communication system. Therefore, a control of these changes by the first base station is a preferred solution.

Preferably, the method further comprises the step of changing the operating condition of the second transmission apparatus and the changing step of the operating condition is executed temporal in parallel to the adapting step of the downtilt angle and/or the changing step of the operating condition is an activation or a deactivation of the second transmission apparatus. This provides a benefit of simultaneously adapting the downtilt angle of the first antenna system and changing the operating condition of the second transmission apparatus and thereby no coverage holes or additional interference may appear not for a short time period either. Furthermore, a complete temporal deactivation of the second transmission apparatus allows reducing the energy consumption of the radio communication network as far as possible by completely switching off corresponding HF equipment such as baseband boards and power amplifiers and thereby saving most electrical energy.

In a preferred embodiment, the first coverage area includes the second coverage area, if the second transmission apparatus is deactivated and the second coverage area extends the first coverage area, if the second transmission apparatus is activated.

Preferably, the adaptation step of the downtilt angle may be based on at least two predefined configurations for the downtilt angle and a look-up table comprises the at least two predefined configurations. The predefined configuration allows for a fast adaptation of the downtilt angle of the first antenna system, because no complex algorithm for calculating an optimum downtilt angle is required each time, when the operating condition of the second transmission apparatus has been changed or must be changed.

In a preferred embodiment, the look-up table may comprise a predefined first downtilt angle for the first antenna system for an operable state of the second transmission apparatus and may comprise a predefined second downtilt angle for the first antenna system for an inoperable state of the second transmission apparatus. Thereby, an easy switching of the downtilt angle between two angles is provided without any complex adaptation algorithm.

According to further embodiments, the method further comprises the step of configuring the look-up table by an operation and maintenance center and/or the steps of executing a learning algorithm, and generating the look-up table by the learning algorithm.

Further advantageous features of the invention are defined and are described in the following detailed description of the invention.

**BRIEF DESCRIPTION OF THE FIGURES**

The embodiments of the invention will become apparent in the following detailed description and will be illustrated by accompanying figures given by way of non-limiting illustrations.

Figure 1 shows schematically a first base station of a radio communication network, that provides wireless coverage for a first coverage area by applying a first downtilt angle to an antenna system of the first base station and a second base station of the radio communication network, that provides wireless coverage for a second coverage area according to a first operation condition of a second transmission apparatus of the second base station.

Figure 2 shows schematically the first base station, which applies a second downtilt angle to the antenna system of the first base station with respect to a second operating condition of the second transmission apparatus.

Figure 3 shows schematically a flow diagram of a method in accordance to a first embodiment of the invention.

Figure 4 shows schematically a flow diagram of a method in accordance to a second embodiment of the invention.

Figure 5 shows schematically a block diagram of a network node according to the embodiments of the invention.

Figure 6 shows schematically a block diagram of a base station according to the embodiments of the invention.

**DESCRIPTION OF THE EMBODIMENTS**

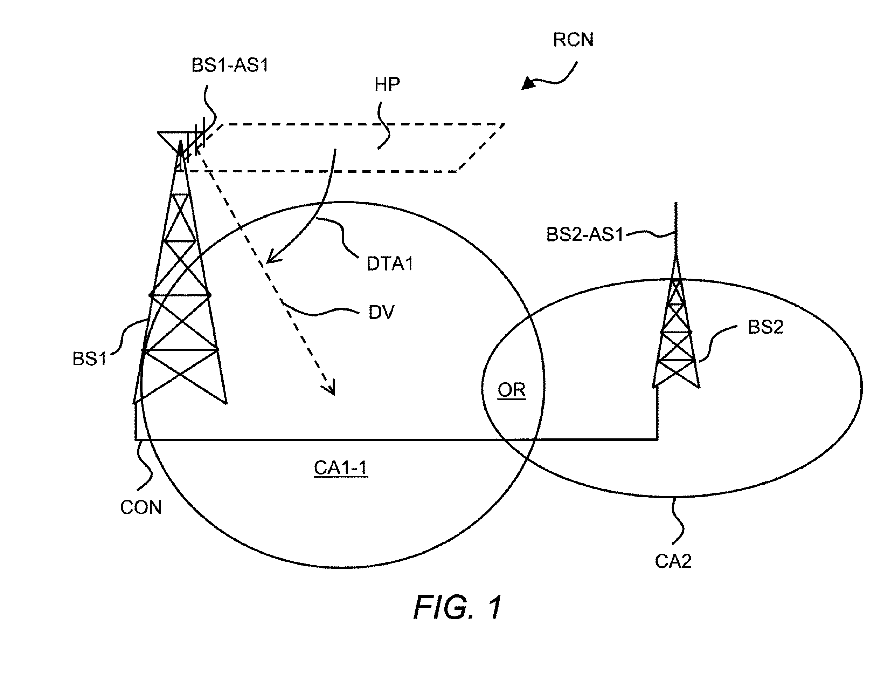

Figure 1 shows schematically a radio communication network RCN, which comprises a first base station BS1 and a second base station BS2. Further base stations and other network nodes of the radio communication network RCN are not shown for simplification. The first base station BS1 may be connected to the second base station BS2 by a connection CON. The connection CON may be for example an X2 interface such as applied in a 3GPP LTE radio communication network (3GPP = Third Generation Partnership Project, LTE = Long Term Evolution).

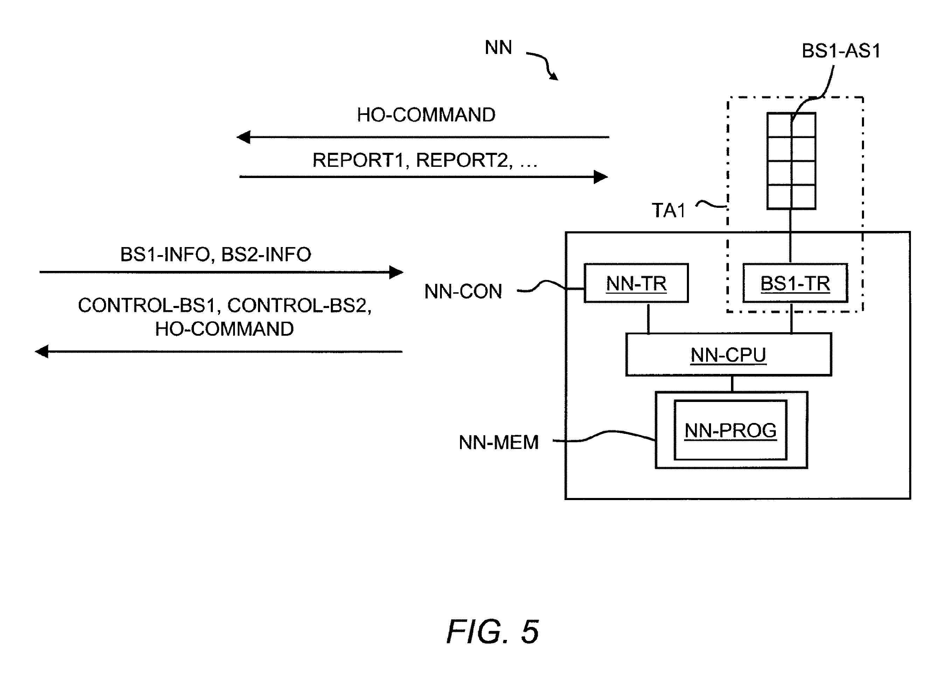

The first base station BS1 comprises a first transmission apparatus (for more details see Figure 5 and corresponding description). The first transmission apparatus comprises an antenna system BS1-AS1. The antenna system BS1-AS1 is adapted to provide wireless coverage for a first coverage area CA1-1 by transmitting first downlink radio frequency signals. The first coverage area CA1-1 may be a so-called radio cell or a so-called radio sector.

Preferably, the antenna system BS1-AS1 may be a directional antenna for allowing a transmission of the first downlink radio frequency signals into a specific direction by applying a first downtilt angle DTA1 to the antenna system BS1-AS1. An antenna downtilt may be defined as an angle between a horizontal plane HP on a same height level as the antenna system BS1-AS1 and a direction vector DV, in which most of the transmission power is radiated. In other words the antenna downtilt is an angle between a main lobe of a radiation pattern of the antenna system BS1-AS1 below (or above) the horizontal plane HP. Thereby, the direction vector DV is approximately directed to a centre of the first coverage area CA1-1. The first base station BS1 may comprise further antenna systems for providing wireless coverage for further radio sectors.

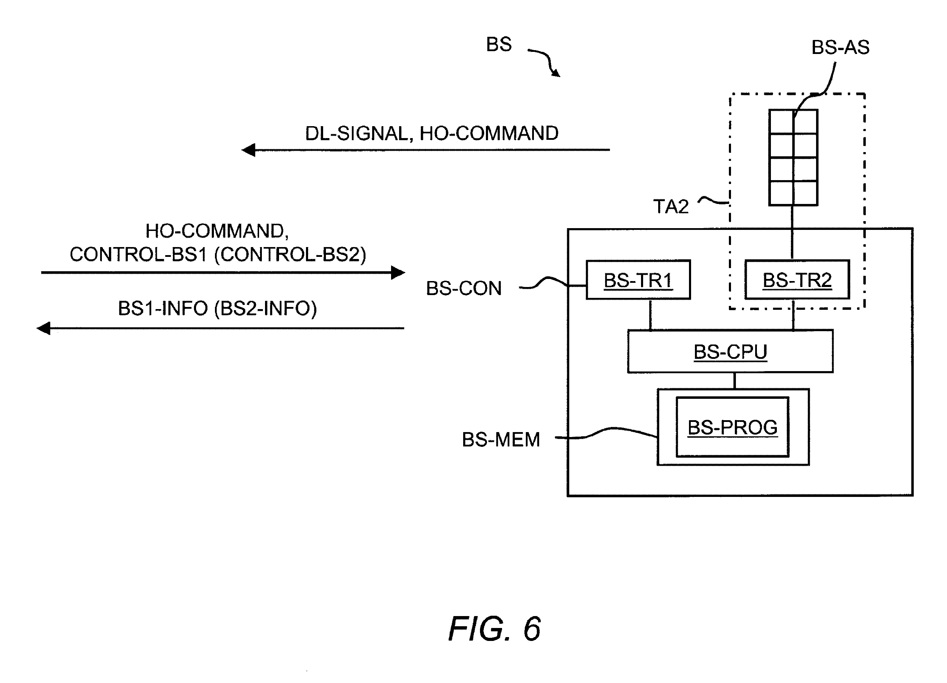

The second base station BS2 comprises a second transmission apparatus (for more details see Figure 6 and corresponding description). The second transmission apparatus comprises an antenna system BS2-AS1 which is adapted to provide wireless coverage for a second coverage area CA2 by transmitting second downlink radio frequency signals according to a first operation condition of the second base station BS2. Alternatively, the second base station BS2 may comprise more than one antenna system for providing wireless coverage for further coverage areas.

Preferably, the antenna system BS2-AS1 may be an omni-directional antenna for allowing an undirected horizontal transmission of the second downlink radio frequency signals.

Preferably, the first coverage area CA1-1 may be adjacent to the second coverage CA2 and may be in an operating distance for the first downlink radio frequency signals. This means that the first coverage area CA1-1 and the second coverage area CA2 may a have a common border and may have an overlap region OR in which the first downlink radio frequency signals and the second downlink radio frequency signals can be received by mobile stations with a same RSRP (RSRP = Reference Signal Received Power) such as defined by 3GPP for LTE. The RSRP depends on different parameters and environmental conditions such as transmission power, path loss, shadowing, antenna arrangement, etc.

Further coverage areas provided by further antenna systems of further base stations may be in the operating distance for the first downlink radio frequency signals. This is also not shown in Figure 1 for simplification.

The first base station BS1 may be for example a so-called macro base station such as a NodeB or an enhanced NodeB specified by the 3GPP standardization organization. The macro base station has a specific size and mounting form noticeably larger than those of a pico base station, may be installed for example at a roof of a building or at dedicated antenna masts, usually provides a first maximum output power of 46 dBm (equal to 40 W) and provides wireless coverage for a dedicated region of the radio communication network, which can be not provided by other macro base stations in a neighbourhood. This means, that a failure of the macro base station would generate a coverage hole, which cannot be completely covered or alternatively covered by macro base stations in the neighbourhood.

The second base station BS2 may be for example a so-called low power base station such as a so-called pico base station and may provide a second maximum output power of for example 1 W. Pico base stations are usually installed at places (so-called hot spots) within a maximum extension of the first coverage area CA1-1 (e.g. at the centre of the first coverage area CA1-1 or at a border of the first coverage area CA1-1) to provide further data transmission capacity within the first coverage area CA1-1. Pico base stations may be for example installed at street lights, at a wall inside or outside a building etc.

The macro base station and the pico base station are usually owned by a same operator of the radio communication network.

The low power base station may be alternatively a femto base station owned by a private person or a company, if the private person or the company allows, that mobiles of all subscribers of the operator of the radio communication network can connect to the femto base station. This requires, that a so-called closed subscriber group is not activated or applied at the femto base station. In such a case the connection CON between the first base station BS1 and the second base station BS2 may not exist.

The first operating condition of the second base station BS2 may be for example a state, in which the second base station BS2 transmits the second downlink radio frequency signals with the second maximum transmission power.

In an alternative, the first operating condition of the second base station BS2 may be a state, in which the second base station BS2 is allowed to transmit the second downlink radio frequency signals up to half of the second maximum transmission power.

In the first operating condition, the second coverage CA2 may extend the first coverage CA1-1 for load balancing reasons by providing additional radio resources.

The first downtilt angle DTA1 is adjusted to the first operating condition of the second base station BS2. The first downtilt angle DTA1 may be for example in a range between 17° and 21° depending on a distance between the first base station BS1 and the second base station BS2.

Preferably, the antenna downtilt of the antenna system BS1-AS1 may be adapted in such a way, that no coverage hole exists between the first coverage area CA1-1 and the second coverage CA2 such as shown in Figure 1 and that inter-sector interference or inter-cell interference between the first coverage area CA1-1 and the second coverage CA2 is minimized. The antenna downtilt may be adjusted mechanically for example by adjusting an elevation angle at a computer-controlled retaining clamp, which fixes the antenna system BS1-AS1 to an antenna mast. Alternatively, the antenna downtilt may be adjusted electrically per remote control by using vertically stacked antenna arrays and by adjusting predefined phase shifts between the antenna arrays for the first downlink radio frequency signals.

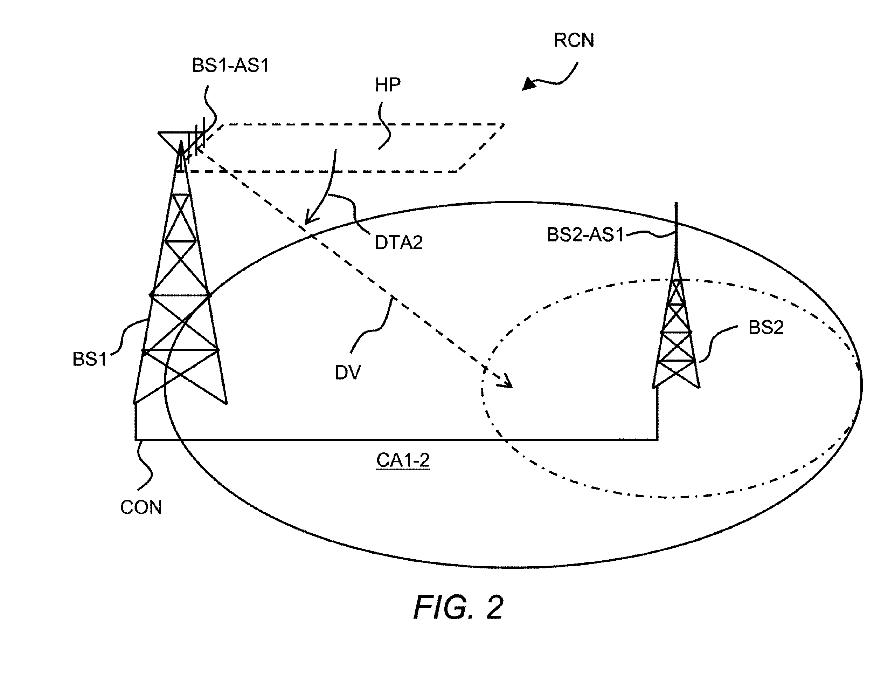

Figure 2 shows schematically the first base station BS1, that applies a second downtilt angle DTA2 to the antenna system BS1-AS1 with respect to a second operating condition of the second transmission apparatus of the base station BS2.

The second operating condition of the second transmission apparatus may be for example a state, in which the second base station BS2 is deactivated and transmits no second downlink radio frequency signals as shown in Figure 2. Therefore, the second coverage area CA2 is not existent in Figure 2 and is adumbrated only by a dot and dash line.

In an alternative, the second operating condition of the second transmission apparatus may be a state, in which the second base station BS2 transmits the second downlink radio frequency signals with a different transmission power than regarding the first operating condition.

A second downtilt angle DTA2 smaller than the first downtilt angle DTA1 is adjusted at the antenna system BS1-AS1 for the second operating condition of the second transmission apparatus.

The second downtilt angle DTA2 may be for example in a range between 13° and 17° depending on the distance between the first base station BS1 and the second base station BS2.

For the second operating condition of the second transmission apparatus, the first coverage CA1-2 may be increased or may be shifted in such a way by adjusting the antenna downtilt of the antenna system BS1-AS1 that the first coverage area CA1-2 includes the former second coverage area CA2, which is indicated in Figure 2 by the dot and dash line.

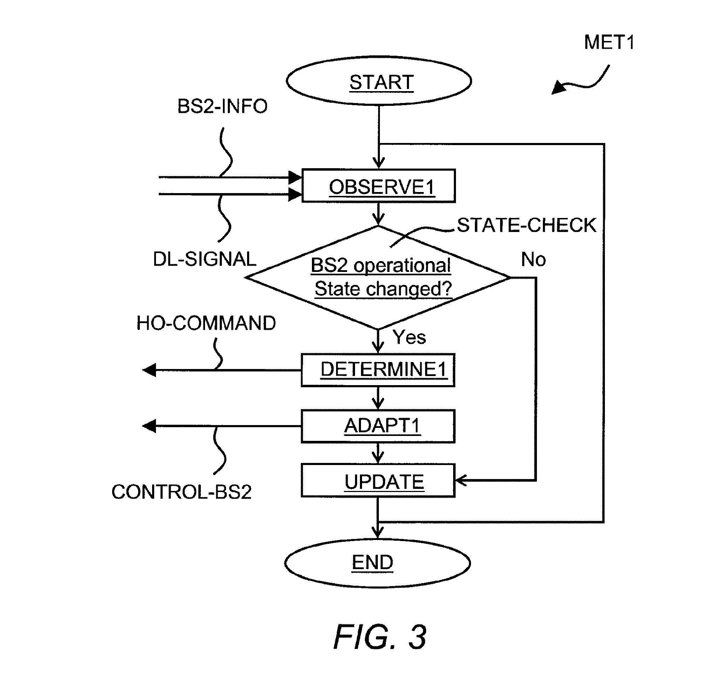

Referring to Figure 3 a flow diagram of a first method MET1 in accordance to a first embodiment of the invention is shown. The number of the steps for performing the first method MET1 is not critical, and as can be understood by those skilled in the art, that the number of the steps and the sequence of the steps may vary without departing from the scope of the invention.

The first method MET1 may be implemented for example in the first base station BS1 shown in Figure 1 or in a further network node of the radio communication network such as a radio network controller, which is applied in 3GPP UMTS (UMTS = Universal Mobile Telecommunication Systems) or more generally in a network server, which controls the base stations BS1, BS2 of the radio communication network.

If the first method MET1 is started at step START, in a first step OBSERVE1 operating conditions of transmission apparatus of base stations in a neighbourhood of the first coverage area CA1 of the first base station BS1 may be observed for any changes, which influence wireless coverage and the interference situation in the radio communication network RCN. According to a first option, during the step OBSERVE1 a signalling message BS2-INFO may be received from the second base station BS2 or from an operation and maintenance centre of the radio communication network. The signalling message BS2-INFO may be for example transmitted by the second base station BS2 during an activation or deactivation procedure for the second transmission apparatus of the second base station BS2.

The signalling message BS2-INFO may comprise for example a first information field for an operating condition of the second transmission apparatus or the second base station BS2 or one or several separate first information fields for operating conditions of two or more transmission apparatus, if the second base station BS2 comprises more than one transmission apparatus. The first information field may comprise for example a digital zero for a deactivation state or a digital one for an activation state. In the deactivation state, no second downlink radio frequency signals may be transmitted from the second transmission apparatus of the second base station BS2. In the activation state, the second downlink radio frequency signals may be transmitted via the second transmission apparatus of the second base station BS2.

The signaling message BS2-INFO may further comprise one or several second information fields for one or several downlink transmission parameters of the second transmission apparatus. The second information fields may comprise for example a transmit power value in dBm and/or a downtilt angle in angular degrees and/or a range of coverage in meters estimated for example from a current interference situation.

Alternatively, the signaling message BS2-INFO may comprise the one or several second information fields and not the one or several first information fields.

According to a second option if the first method MET1 is executed by the first base station BS1, during the step OBSERVE1 the first base station BS1 may receive measurement reports from mobile stations located within the first coverage area CA1-1, CA1-2. These measurement reports may comprise for example SINR values (SINR = Signal to Interference-plus-Noise Ratio) and/or CQI values (CQI = Channel Quality Indicator) not only for the serving cell, which is given by the first coverage area CA1-1, CA1-2 but also an SINR value and/or a CQI value obtained from a reception of pilots of the second downlink radio frequency signals at a respective mobile station. Such a measurement report may also comprise a location information of the mobile station, if the mobile station may comprise for example a GPS receiver (GPS = Global Positioning System). In an alternative, the first base station BS1 may be able to estimate a position of the mobile station within the first coverage area CA1-1, CA1-2 for example by triangulation or by a reporting of preferred and/or unfavoured indices of precoding vector by the mobile station, if beamforming is applied by the first transmission apparatus.

From the SINR values or the CQI values and the positions of the mobile stations, the first base station BS1 may be able to estimate an extension of the second coverage area CA2 or a deactivation of the second transmission apparatus. If no SINR values and/or CQI value are reported from any mobile station, it may be concluded, that the second transmission apparatus of the second base station BS2 is completely deactivated.

The received information BS2-INFO and/or the indicators obtained from the measurements provide information of a current operating condition of the second base station BS2 and/or the second transmission apparatus. Either the first option or the second option may be applied or both the first option and the second option may be applied in parallel by the step OBSERVE1.

In a next step STATE-CHECK, the received information BS2-INFO and/or the obtained indicators may be applied to compare a current configuration of the antenna system BS1-AS1 with the current operating condition of the second transmission apparatus.

For this purpose, preferably, for two or more operating conditions of the second transmission apparatus predefined configurations for the antenna system BS1-AS1 may be stored in a look-up table such as shown in Table 1.

Table 1

| | | Current operating condition of the second transmission apparatus of the second base station BS2 | Predefined downtilt angle for the antenna system BS1-AS 1 [°] | Predefined maximum allowable transmission power for the first transmission apparatus of the first base station BS1 |
|---|---|---|---|---|
| | 1 | activated with output power set to the maximum output power | A | $0.5 \cdot P_0$ |
| | 2 | activated with output power set to half of the maximum output power | B | $0.8 \cdot P_0$ |
| | 3 | deactivated | C | $P_0$ |

The letters A, B, C represent different values for the downtilt angle of the antenna system BS1-AS1 with a proportion of A>B>C for example. Exemplarily, the second column of Table 1 comprises three different operating conditions of the second base station BS2. Alternatively, the look-up table only comprises two entries: one for an activation state and one for a deactivation state of the second transmission apparatus. In further alternatives, the look-up table may comprise more than three operating conditions, if for example various downtilt angles may be applied at the antenna system BS2-AS1. For a person skilled in the art, it is clear, that the Table 1 may comprise further entries regarding a further base station being located within the first coverage area CA1-1, CA1-2. The Table 1 may also comprise predefined downtilt angles for various conditions regarding a mixed situation of the second base station BS2 and the further base station. According to a first entry of the look-up table, a predefined downtilt angle A may be assigned to the first operating condition shown in Figure 1 and according to a third entry of the look-up table, a predefined downtilt angle C may be assigned to the second operating condition shown in Figure 2. According to a second entry of the look-up table, a power amplifier of the second transmission apparatus may be not operated at its maximum transmission power limit.

Optionally, a maximum allowable first transmission power for the first downlink radio frequency signals transmitted by the antenna system BS1 - AS1 may be assigned to the various operating conditions of the second transmission apparatus. A value $P_0$ may be the first maximum transmission power for the first downlink radio frequency signals. For the first operating condition of the second base station BS2 the maximum allowable transmission power may be for example limited to half of the first maximum transmission power (see row 2 in Table 1).

The look-up table may be configured for example by the operation and maintenance center of the radio communication network RCN when the first base station BS1 is installed, when the second base station BS2 is upgraded for example by a further antenna system or when a further base station in a neighbourhood of the first base station BS1 is installed.

If the antenna system BS1-AS1 of the first base station BS1 is currently configured with the first downtilt angle DTA1 as shown in Figure 1 and if it is determined from the received information BS2-INFO and/or the obtained indicators that the second base station BS2 is in a deactivation state as shown in Figure 2, a change of the operating condition of the second transmission apparatus may be asserted by a comparison with the look-up table, that the current configuration of the antenna system BS1-AS1 does not fit to the current operating condition of the second transmission apparatus.

In such a case, an observed change of the operating condition of the second transmission apparatus may trigger a next step DETERMINE1.

If no change of the operating condition may be observed or if only a small change of the operating condition below a predefined change threshold is observed such as a slight change in the SINR values and/or the CQI values, the first method MET1 may be proceeded with a further optional step UPDATE.

In the next step DETERMINE1, a new downtilt angle value may be determined for example by reading out a corresponding value from the look-up table, which fits to the observed current operating condition of the second transmission apparatus.

Optionally, a handover process may be triggered for one or several mobile stations by transmitting a handover message HO-COMMAND directly to the one or the several mobile stations or via a backhaul transmission line and via the second base station BS2 to the one or the several mobile stations. If for example it has been observed, that the second base station BS2 has been activated from a deactivation state, it may be decided to reassign radio links of the one or the several mobile stations located within the second coverage area CA2 from the first base station BS1 to the second base station BS2 by triggering a handover from the first base station BS1 to the second base station BS2.

In a further step ADAPT1, the new downtilt angle value may be applied to a mechanical adjustment unit or an electric adjustment unit of the antenna system BS1-AS1 to adapt and adjust the antenna downtilt of the antenna system BS1-AS1. If the first method MET1 is operated outside the first base station BS1 for example by the radio network controller, a first control message CONTROL-BS2 may be sent from the radio network controller to the first base station BS1 and the first control message CONTROL-BS2 may comprise for example the new downtilt angle value or a control signal, which may directly drive the mechanical or the electrical adjustment unit for adjusting the new downtilt angle.

The further optional step UPDATE may be executed after the step ADAPT1. In the optional step UPDATE, a learning algorithm may be applied for updating the look-up table, which takes for example into account a first distribution of mobile stations within the first coverage area CA1-1, CA1-2, a second distribution of mobile stations within the second coverage area CA2, a first traffic load of the first coverage area CA1-1, CA1 -2, a second traffic load of the second coverage area CA2, an overall spectral efficiency etc. The learning algorithm may work for example in the following way: If the look-up table may not contain an entry for the current operating condition of the second transmission apparatus, which was determined in the step OBSERVE1, the first transmission apparatus may be configured for example with a default initial configuration (default downtilt angle for the antenna system BS1-AS1 and preferably a default maximum transmission power). Following, a system performance (e.g. cell throughput of the first coverage area CA1-1, CA1-2 of the first base station BS1 and the second coverage area CA2 of the second base station BS2) for the initial configuration may be determined and stored. Afterwards further default initial configurations may be tested in the same way. If a significant number of default initial configurations have been checked, the one which achieves a best performance may be inserted into the look-up table.

Preferably, the steps OBSERVE1, STATE-CHECK, DETERMINE1, ADAPT1 and UPDATE of the first method MET1 may be periodically repeated. In an alternative, the first method MET1 ends at step END and may be restarted by the step START after a predefined time period.

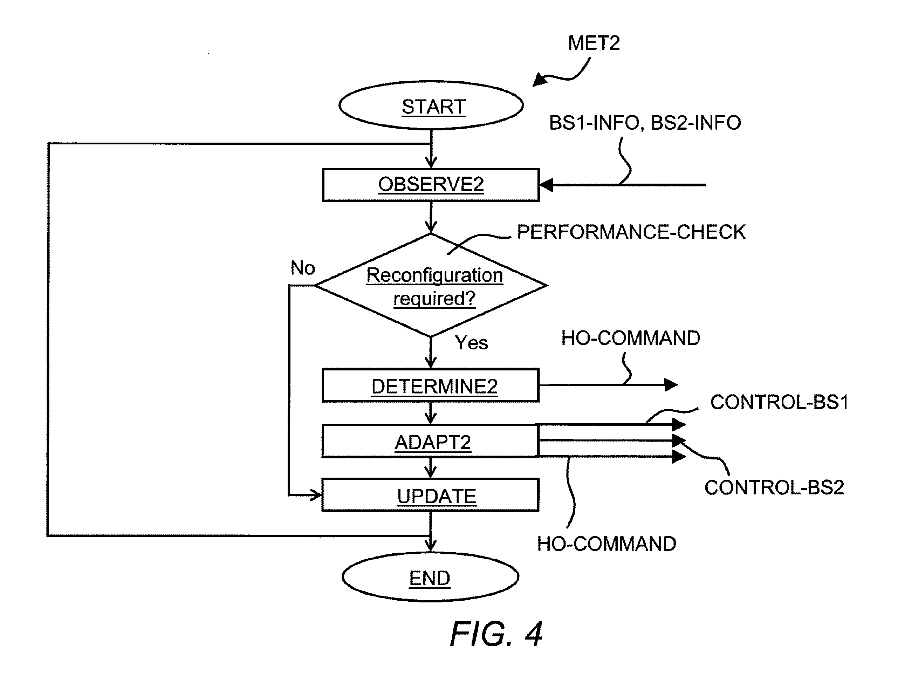

Referring to Figure 4 a flow diagram of a second method MET2 in accordance to a second embodiment of the invention is shown. The number of the steps for performing the second method MET2 is not critical, and as can be understood by those skilled in the art, that the number of the steps and the sequence of the steps may vary without departing from the scope of the invention. For method steps, which may be identical for the first method MET1 and the second method MET2 same reference numerals may be assigned.

The second method MET2 may be implemented for example in the first base station BS1 shown in Figure 1 or in the radio network controller such as applied in 3GPP UMTS or more generally in the network server, which controls the base stations BS1, BS2 of the radio communication network. The second method MET2 may allow for a simultaneously control of the operating conditions of the first transmission apparatus of the first base station BS1 and the second transmission apparatus of the second base station BS2. If the second method MET2 is executed by the first base station BS1, the second base station BS2 may be controllable by the first base station BS1. This means, that the first base station BS1 may be a master base station for the second base station BS2 and the second base station BS2 may be a slave base station for the first base station BS1. The first base station BS1 may be allowed to control activation or deactivation states of the second transmission apparatus and/or the second base station BS2, to control output power of the second transmission apparatus and/or to control an antenna downtilt at the antenna system BS2-AS1 of the second base station BS2.

If the second method MET2 is started at step START, in a first step OBSERVE2 one, several or all parts of the following information may be collected by the network node operating the second method MET2: distribution of mobile stations within a predefined area, velocity of the mobile stations, pending data traffic for the mobile stations, free capacity at network nodes within the predefined area, frequency of transmission errors within the predefined area, current energy consumption at network nodes serving the predefined area. The predefined area may comprise for example one or several radio cells of the first base station BS1 and radio cells of further base stations such as the second base station BS2 in a direct neighbourhood to the first base station BS1. The information may be transmitted by a first signalling message BS1-INFO from the first base station BS1 and by the second signalling message BS2-INFO from the second base station BS2 to the network node operating the second method MET2. The first signalling message BS1-INFO may be not required, if the second method MET2 is performed by the first base station BS1.

In a further step PERFORMANCE-CHECK, network performance within the predefined area may be verified based on the information collected in the previous step OBSERVE2.

According to a first simple algorithm, a decision, whether a reconfiguration of the operating conditions of the first transmission apparatus and/or the second transmission apparatus is required, may be based on information regarding current position of mobile stations and preferably on information regarding data rates requested by the mobile stations. A current position of a mobile station may be determined by the GPS receiver of the mobile station and by transmitting information of the current position to the network node performing the second method MET2. Alternatively, the current position of the mobile station may be determined by a comparison of known uplink transmission power as transmitted by the mobile station and received uplink transmission power as measured at a base station of the radio communication network. According to a further alternative, the current position of the mobile station may be determined by a direction of a downlink beam of a MIMO transmission or a MISO transmission to the mobile station.

If a current position of at least one mobile station has been determined within the second coverage area CA2 and the second transmission apparatus is deactivated, it may be decided, that the second transmission apparatus should be activated.

If there is for example no current data connection between the second base station BS2 and a mobile station and the second transmission apparatus is activated, it may be decided, that the second transmission apparatus should be deactivated.

According to a more preferred algorithm, if a number of current positions of mobile stations above a predefined threshold has been determined within the second coverage area CA2 and the second base station BS2 is deactivated, it may be decided, that the second base station BS2 and the second transmission apparatus should be activated or that the second transmission apparatus should be activated, if the second base station BS2 is in a stand-by mode. Similarly, if a number of current positions of mobile stations below a predefined threshold has been determined within the second coverage area CA2 and the second transmission apparatus is activated, it may be decided, that the second base station BS2 should be deactivated or that the second transmission apparatus should be deactivated and the second base station BS2 is set into the stand-by mode. According to a further preferred algorithm, the second transmission apparatus of the second base station BS2 and/or a further transmission apparatus of a further base station (not shown in Figure 1 and Figure 2 for simplification) may be activated, if the first transmission apparatus of the first base station BS1 is in an overload situation. In such a case, the network node performing the method MET2 may determine those transmission apparatus of one or several base stations, those activation would reduce the load at the first transmission apparatus.

Also, it may be permanently checked, whether the first transmission apparatus comprises enough free capacity to take over data traffic from the second transmission apparatus and/or a further transmission apparatus in a neighbourhood of the first base station BS1 to be able to deactivate one or several transmission apparatus at the second base station BS2 and/or the further base station. Thereby, a number of active transmission apparatus or a number of active base stations is permanently adapted to a current load in the radio communication network.

A reconfiguration may be required, if an upcoming overload situation may be detected at the first base station BS1 for the first coverage area CA1 and/or at the second base station BS2 for the second coverage area CA2 by comparing for example a current load with a first predefined load threshold. If the current load is equal to or above the first predefined load threshold, a step DETERMINE2 may be executed next.

A reconfiguration may be also required, if an upcoming underload situation may be detected at the first base station BS1 for the first coverage area CA1 and/or at the second base station BS2 for the second coverage area CA2 by comparing for example the current load with a second predefined load threshold. If the current load is equal to or below the second predefined load threshold, the step DETERMINE2 may also be executed next.

If neither an upcoming overload situation nor an upcoming underload situation may be detected at the first base station BS1 within the first coverage area CA1 and the second base station BS2 within the second coverage CA2, the optional step UPDATE may be the next step.

For keeping the energy consumption as low as possible, a first energy consumption per successfully transmitted digital bit $\eta_c$ may be calculated for example for current operating conditions of the first base station BS1 and the second base station BS2 using for example following equation:

$$\eta_c = \frac{\sum_i r_{c,i} \cdot \Delta t}{\sum_j E_{c,j}} \qquad (1)$$

with:

$\sum_i r_{c,i}$ : sum over all transmission apparatus in the predefined area,

$r_{c,i}$: current data rate of successfully transmitted digital bits at transmission apparatus i,

$\Delta t$ : time frame

$\sum_j E_{c,j}$ : sum over all base stations in the predefined area,

$E_{c,j}$ : current energy consumption at base station j during the time frame $\Delta t$.

In a second sub-step, data rates and energy consumptions may be predicted, if the operating conditions at the first base station BS1 and the second base station BS2 may be changed according to one of the operating conditions listed in the look-up table. Such predictions may be obtained for example in a simplified way, by storing data rates and energy consumptions in the look-up table or in a further look-up table, which have been measured during previous time frames, when the first base station BS1 and the second base station BS2 have been operated in these operating conditions.

In a third sub-step, one or several second energy consumptions per successfully transmitted digital bit $\eta_{f,k}$ (k: numbering index) may be calculated for one or several future operating conditions of the first base station BS1 and the second base station BS2.

In a fourth sub-step, the first energy consumption per successfully transmitted digital bit $\eta_c$ may be compared with the one or several second energy consumptions per successfully transmitted digital bit $\eta_{f,k}$, whether a similar network performance may be achievable with reduced energy consumption.

If two or more of the second energy consumptions per successfully transmitted digital bit $\eta_{f,k}$ may provide a smaller energy consumption with similar network performance (e.g. predicted increase of transmission errors less than 5 %) than a current energy consumption, the step DETERMINE2 may be executed next.

If none of the second energy consumptions per successfully transmitted digital bit $\eta_{f,k}$ may provide reduced energy consumption with similar network performance the step UPDATE may be the next method step.

In the step DETERMINE2, that operating parameters and operating conditions of the first transmission apparatus and the second transmission apparatus from a row of the Table 1 may be selected according to the above described alternative, which provide a largest energy saving. Alternatively, following algorithm may be applied, to make decisions about the operating condition of the second transmission apparatus:

If an overload situation has been detected at the first transmission apparatus of the first base station BS1, a base station such as the second transmission apparatus of the second base station BS2 has to be determined, which is able to take over the most data traffic from the first base station BS1. Thereby, it may be possible that the first base station BS1 gets into an underload situation, which allows, that the first base station BS1 may take over complete data traffic from for example two further transmission apparatus in a further run of the second method MET2. This may allow deactivating these two further transmission apparatus with an overall result of one less activated transmission apparatus.

The determination of a transmission apparatus to be activated may be based on the locations of the mobile stations and on the location of deactivated transmission apparatus in the neighbourhood of the first base station BS1 as described in TR 36.927 V10.0.0 (2011-06), section 5.1.2.3 (solution E). Locations of the deactivated transmission apparatus in the neighbourhood may be determined and stored in a database, when base stations comprising these transmission apparatus are installed. For a mobile station within the first coverage area CA1 and connected to the first base station BS1 a distance may be calculated to one or several of the deactivated base stations in the neighbourhood of the first base station BS1. If a distance between the mobile station and a deactivated base station is equal to or below a predefined distance value, a virtual load counter for this deactivated base station is increased by the current data traffic load of this mobile station. The calculation of the distances and the virtual load counter may be repeated for any combination of a mobile station within the first coverage area CA1 and connected to the first base station BS1 and of a deactivated base station in the neighbourhood of the first base station BS1. That deactivated base station may be selected to activated, for which the virtual load counter is the largest one.

According to a further alternative, a decision about possible base stations for being activated may be based on a probing and a measurement reporting from the mobile stations as also described in TR 36.927 V10.0.0 (2011-06), sections 5.1.2.3 (solution D) and 6.1.2.2.

According to even further alternatives, a decision about possible base stations for being activated may be based on applying two or all alternatives as described above in parallel and that transmission apparatus may be chosen for activation, which has been obtained most hits by the parallel application of these algorithms.

If an underload situation has been detected at the first transmission apparatus of the first base station BS1, a base station such as the second base station BS2 or the second transmission apparatus as part of the second base station BS2 will be determined, which could be switched off and which data traffic may be transferred to the first base station BS1.

The determination of a transmission apparatus to be deactivated may be based on load reports contained for example within the second signalling message BS2-INFO. The second transmission apparatus may be for example a candidate for deactivation, if following equation may be exemplarily fulfilled:

$$ load_{BS1} + \Delta load_{BS1} < LT1 \qquad (2) $$

with:

> $load_{BS1}$ : current load at the first transmission apparatus,
> $\Delta load_{BS1}$ : additional load at the first transmission apparatus, if current load of the second transmission apparatus is transferred to the first transmission apparatus,
> $LT1$ : the first predefined load threshold.

The calculation may be repeated for further transmission apparatus of further active base stations in a neighbourhood of the first base station BS1. Among all active base stations in a neighbourhood of the first base station BS1, that active transmission apparatus may be selected for being deactivated, for which a lowest additional load may be expected to be transferred to the first transmission apparatus of the first base station BS1. Optionally, a handover process may be triggered for one or several mobile stations by transmitting the handover message HO-COMMAND directly to the one or the several mobile stations or via a backhaul transmission line and via the second base station BS2 to the one or the several mobile stations. If for example it has been decided, that the second transmission apparatus should be deactivated, it is required to reassign remaining radio links between the second base station BS2 and the one or the several mobile stations to the first base station BS1 by triggering a handover from the second base station BS2 to the first base station BS1.

In a next step ADAPT2 after the step DETERMINE2, following sub-steps may be performed in a synchronized way:

In a first sub-step, the antenna downtilt of the antenna system BS1-AS1 may adjusted to the downtilt angle found in the look-up table, which fits to the operating condition of the second transmission apparatus, that has been selected by the step DETERMINE2. If the second method MET2 is not performed by the first base station BS1, a second control message CONTROL-BS1 may be sent from the network node performing the second method MET2 to the first base station BS1 and the second control message CONTROL-BS1 may comprise for example the new downtilt angle value for the antenna system BS1-AS1 or a control signal, which may directly drive the mechanical or the electrical adjustment unit for adjusting the new downtilt angle.

In a second sub-step performed at the same time as the first sub-step, the first control message CONTROL-BS2 may be sent from the network node performing the second method MET2 to the second base station BS2 and the first control message CONTROL-BS2 may comprise for example an activation command or a deactivation command for the second transmission apparatus of the second base station BS2. Alternatively, the first control message CONTROL-BS2 may comprise separate deactivation commands or separate activation commands, if the second base station BS2 comprises more than one transmission apparatus and more than one transmission apparatus should be deactivated. According to further alternatives, the first control message CONTROL-BS2 may further comprise one or several new downtilt angles and/or one or several maximum allowable output power values for the second transmission apparatus. Optionally, a handover process may be triggered for one or several mobile stations by transmitting the handover message HO-COMMAND directly to the one or the several mobile stations or via a backhaul transmission line and via the second base station BS2 to the one or the several mobile stations. If for example the second transmission apparatus has been activated, radio links between the first base station BS1 and mobile stations within the second coverage CA2 might be immediately transferred to the second base station BS2 by triggering a handover from the first base station BS1 to the second base station BS2.

After the step ADAPT2 the step UPDATE may be performed.

Preferably, the steps OBSERVE2, PERFORMANCE-CHECK, DETERMINE2, ADAPT2 and UPDATE of the second method MET2 may be periodically repeated. In an alternative, the second method MET2 ends at step END and may be restarted by the step START after a predefined time frame.

The first method MET1 and the second method MET2 are described with respect to the first transmission apparatus of the first base station BS1 and the second transmission apparatus of the second base station BS2. For a person skilled in the art it is clear, that the first method MET1 and the second method MET2 may be extended with respect to further transmission apparatus of the first base station BS1 and/or the second base station BS2 or to further base stations in a neighbourhood to the first base station BS1.

Referring to Figure 5 a block diagram of a network node NN is shown. The network node NN may be for example the first base station BS1 or may be a network server for controlling the first base station BS1 and the second base station BS2 such as a radio network controller used in UMTS.

The network node NN may comprise an external connector NN-CON, a first transceiver NN-TR connected internally to the external connector NN-CON, a CPU (CPU = central processing unit) NN-CPU, and a computer readable medium NN-MEM. A computer readable program NN-PROG and the look-up table (see Table 1) may be stored at the computer readable medium NN-MEM. The CPU NN-CPU is foreseen for executing the computer readable program NN-PROG. The computer readable program NN-PROG is foreseen for executing the steps of the first method MET1 and/or the second method MET2.

The first transceiver NN-TR may receive via the external connector NN-CON the first signalling message BS1-INFO and/or the second signalling message BS2-INFO and may transmit via the external connector NN1-CON the first control message CONTROL-BS2 and/or the second control message CONTROL-BS1 and optionally the handover message HO-COMMAND.

If the network node NN is the first base station BS1, the network node NN may further comprise the first transmission apparatus TA1 connected to the CPU NN1-CPU. The first transmission apparatus TA1 may comprise the antenna system BS1-AS1 and a further transmitter BS1-TR. The further transmitter BS1-TR may comprise a digital baseband processing board, digital-to-analogue converter, a power amplifier and preferably further components as known for a person skilled in the art.

Alternatively, the first transmission apparatus TA1 may be part of a wireless transceiver of the first base station BS1.

The antenna system BS1-AS1 is sketched exemplarily as a 2x4 antenna array with two vertical columns and four horizontal lines. The antenna downtilt of the antenna system BS1-AS1 may be adjusted electronically by adapting a phase shift between the vertical stacked antenna elements. Alternatively a mechanical adjustment unit may be applied (not shown in Figure 5).

The second transmitter BS1-TR may transmit via the antenna system BS1 - AS1 the handover message HO-COMMAND.

A wireless receiver of the first base station preferably as part of a wireless transceiver may receive via the antenna system BS1-AS1 the measurement reports REPORT1, REPORT2, ... from the mobile stations.

Referring to Figure 6 a block diagram of a base station BS is shown. The base station BS may be for example the first base station BS1 or the second base station BS2.

The base station BS may comprise an external connector BS-CON, a first transceiver BS-TR1 connected internally to the external connector BS-CON and to a CPU BS-CPU, a second transmission apparatus TA2 connected to the CPU BS-CPU, the CPU BS-CPU, and a computer readable medium BS-MEM.

The second transmission apparatus TA2 may comprise an antenna system BS-AS and a second transmitter BS-TR2. The second transmitter BS-TR2 may comprise a digital baseband processing board, digital-to-analogue converter, a power amplifier and preferably further components as known for a person skilled in the art.

Alternatively, the second transmission apparatus TA2 may be part of a wireless transceiver of the base station BS.

A computer readable program BS-PROG may be stored at the computer readable medium BS-MEM. The CPU BS-CPU is foreseen for executing the computer readable program BS-PROG. The computer readable program BS-PROG may be foreseen for controlling an adaptation of the downtilt angle of the antenna system BS-AS based on the control message CONTROL-BS1, CONTROL-BS2 reveived via the external connector BS-CON and the first transceiver BS-TR.

The first transceiver BS-TR may further receive via the external connector BS-CON the handover message HO-COMMAND.

The first transceiver BS-TR may transmit via the external connector BS-CON the signalling message BS1-INFO, BS2-INFO.

The antenna system BS-AS is sketched exemplarily as a 2x4 antenna array with two vertical columns and four horizontal lines. The antenna downtilt of the antenna system BS-AS may be adjusted electronically by adapting a phase shift between the vertical stacked antenna elements. Alternatively a mechanical adjustment unit may be applied (not shown in Figure 6).

The second transmitter BS-TR2 may transmit via the antenna system BS-AS the second downlink radio frequency signals DL-SIGNAL and optionally the handover message HO-COMMAND.

A person of skill in the art would readily recognize that steps of the first method MET1 and the second method MET2 of the above-described embodiments can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "... unit" or "means for ..." shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, may be provided through the use of dedicated hardware as well as the through the use of hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1. A method (MET1, MET2) for adapting an antenna downtilt in a radio communication network (RCN), said radio communication network (RCN) comprising a first transmission apparatus (TA1) for transmitting first radio frequency signals and at least one second transmission apparatus (TA2) for transmitting second radio frequency signals, said first transmission apparatus (TA1) comprising a first antenna system (BS1-AS1), said method (MET1, MET2) comprising the step of adapting (ADAPT1, ADAPT2) a downtilt angle (DTA1, DTA2) at said first antenna system (BS1-AS1) for transmitting said first radio frequency signals depending on an operating condition of said at least second transmission apparatus (TA2).

2. Method (MET1, MET2) according to claim 1, wherein a first base station (BS1) comprises said first transmission apparatus (TA1), wherein a second base station (BS2) comprises said at least second transmission apparatus (TA2), wherein said first transmission apparatus (TA1) being adapted for providing wireless coverage for a first coverage area (CA1-1, CA1-2), wherein said at least second transmission apparatus (TA2) being adapted for providing wireless coverage for a second coverage area (CA2), and wherein said second base station is placed within a maximum extension of said first coverage area (CA1-1, CA1-2) of said first base station (BS1).

3. Method (MET1, MET2) according to claim 2, wherein said first base station (BS1) is a macro base station providing a first maximum output power and wherein said second base station (BS) is a pico base station providing a second maximum output power smaller than said first maximum output power.

4. Method (MET1, MET2) according to claim 2 or claim 3, wherein said method (MET) further comprises the step of providing (OBSERVE1, OBSERVE2) from said second base station (BS2) information (BS2-INFO) of said operating condition to said first base station (BS1).

5. Method (MET1, MET2) according to claim 4, wherein said information (BS2-INFO) comprises either of the following:

   - an activation state of said at least second transmission apparatus (TA2) or of said second base station (BS2),
   - a deactivation state of said at least second transmission apparatus (TA2) or of said second base station (BS2),
   - at least one downlink transmission parameter from transmitting said second radio frequency signals from said at least second transmission apparatus (TA2).

6. Method (MET1, MET2) according to claim 5, wherein said at least one downlink transmission parameter is either of the following:

   - a transmit power value,
   - a downtilt angle,
   - a range of coverage.

7. Method (MET2) according to any of the preceding claims 2 to 6, wherein said method (MET2) further comprises the step of controlling said operating condition of said at least second transmission apparatus (TA2) by said first base station (BS1).

8. Method (MET2) according to any of the preceding claims, wherein said method further comprises the step of changing said operating condition of said at least second transmission apparatus (TA2) and wherein said changing step of said operating condition is executed temporal in parallel to said adapting step (ADAPT2) of said downtilt angle (DTA1, DTA2) and/or wherein said changing step of said operating condition is an activation or a deactivation of said at least second transmission apparatus (TA2).

9. Method (MET1, MET2) according to any of the preceding claims 2 to 8, wherein said first coverage area (CA1-2) includes said second coverage area (CA2), if said at least second transmission apparatus (TA2) is deactivated and wherein said second coverage area (CA2) extends said first coverage area (CA1-1), if said at least second transmission apparatus (TA2) is activated.

10. Method (MET1) according to any of the preceding claims, wherein said adaptation step for said downtilt angle (DTA1, DTA2) is based on at least two predefined configurations for said downtilt angle (DTA1, DTA2) and wherein a look-up table comprises said at least two predefined configurations.

11. Method (MET1, MET2) according to claim 10, wherein said method (MET) further comprises the step of configuring said look-up table by an operation and maintenance center and/or the steps of applying a learning algorithm, and generating said look-up table by said learning algorithm.

12. A network node (NN, BS1) for use in a radio communication network (RCN), said network node (NN, BS1) comprising means (NN-CPU, NN-PROG) for adapting a downtilt angle (DTA1, DTA2) at an antenna system (BS1-AS1) of a first transmission apparatus (TA1) of said radio communication network (RCN) for transmitting radio frequency signals depending on an operating condition of at least one second transmission apparatus (TA2) of said radio communication network (RCN).

13. Network node (BS1) according to claim 12, wherein said network (BS1) node is a base station of said radio communication network (RCN) comprising said first transmission apparatus (TA1) or is a network server for controlling said base station (BS1).

14. A base station (BS, BS1, BS2) for use in a radio communication network (RCN), said base station (BS, BS1, BS2) comprising:

- a transmission apparatus (TA2) for transmitting radio frequency signals,
- a receiving device (BS-CON, BS-TR) for receiving a control command (CONTROL-BS1, CONTROL-BS2) from a network node (NN1, BS1) for changing an operating condition of said transmission apparatus (TA2), and
- means (BS-CPU, BS-PROG, BS-TR2) for changing said operating condition simultaneously to adapting a downtilt angle (DTA1, DTA2) of an antenna system (BS1-AS1) of a further transmission apparatus (TA1) of a further base station (NN1, BS1) for transmitting further radio frequency signals.

15. Base station (BS, BS2) according to claim 14, wherein said base station (BS, BS2) is a pico base station.

*FIG. 1*

FIG. 2

*FIG. 3*

MET2

BS1-INFO, BS2-INFO

START

OBSERVE2

PERFORMANCE-CHECK

Reconfiguration required?

No

Yes

DETERMINE2

HO-COMMAND

CONTROL-BS1

ADAPT2

CONTROL-BS2

UPDATE

HO-COMMAND

END

FIG. 4

FIG. 5

DL-SIGNAL, HO-COMMAND

HO-COMMAND,
CONTROL-BS1 (CONTROL-BS2)

BS1-INFO (BS2-INFO)

BS

BS-AS

TA2

BS-CON

BS-TR1

BS-TR2

BS-CPU

BS-MEM

BS-PROG

*FIG. 6*

EP 2 575 388 A1

Europäisches
Patentamt

European
Patent Office

Office européen
des brevets

**EUROPEAN SEARCH REPORT**

Application Number

EP 11 30 6239

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 2009/011640 A2 (ERICSSON TELEFON AB L M [SE]) 22 January 2009 (2009-01-22)<br>* abstract *<br>* paragraph [0004] - paragraph [0015] *<br>* paragraph [0040] - paragraph [0077] *<br>* paragraphs [0080], [0087] - [0090] *<br>----- | 1,8,9,<br>12-14<br>2-7,10,<br>11,15 | INV.<br>H04W16/28 |
| X<br><br><br><br><br><br><br><br><br>Y | "LTE; Evolved Universal Terrestrial Radio Access (E-UTRA); Potential solutions for energy saving for E-UTRAN (3GPP TR 36.927 version 10.0.0 Release 10)",<br>TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE,<br>vol. 3GPP RAN 3, no. V10.0.0,<br>1 July 2011 (2011-07-01), XP014065664,<br>* paragraphs 5.1.1 to 6.2.3 *<br><br>----- | 1,8,9,<br>12-14<br><br><br><br><br><br><br><br>2-7,10,<br>11,15 | |
| X | GB 2 446 438 A (BADO YAMINE [MY]) 13 August 2008 (2008-08-13)<br>* page 1, line 2 - line 21 *<br>* page 3, line 4 - page 5, line 27 *<br>----- | 1,8,9,<br>12-14 | TECHNICAL FIELDS SEARCHED (IPC)<br><br>H04W |
| A | US 2011/009105 A1 (LEE JUNGWOO [US] ET AL) 13 January 2011 (2011-01-13)<br>* abstract *<br>* paragraph [0003] - paragraph [0021] *<br>* paragraph [0037] - paragraph [0055] *<br>* paragraph [0072] - paragraph [0081] *<br>----- | 1-15 | |
| A | EP 1 184 937 A1 (LUCENT TECHNOLOGIES INC [US]) 6 March 2002 (2002-03-06)<br>* abstract *<br>* paragraph [0006] - paragraph [0008] *<br>* paragraph [0010] - paragraph [0012] *<br>* paragraph [0018] - paragraph [0024] *<br>* paragraph [0028] - paragraph [0033] *<br>----- | 1-15 | |

The present search report has been drawn up for all claims

| Place of search | Date of completion of the search | Examiner |
|---|---|---|
| Munich | 21 February 2012 | Biyee, Nicole |

EPO FORM 1503 03.82 (P04C01)

EP 2 575 388 A1

**ANNEX TO THE EUROPEAN SEARCH REPORT
ON EUROPEAN PATENT APPLICATION NO.**

EP 11 30 6239

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2012

| Patent document cited in search report | | Publication date | Patent family member(s) | | Publication date |
|---|---|---|---|---|---|
| WO 2009011640 | A2 | 22-01-2009 | US | 2009023477 A1 | 22-01-2009 |
| | | | WO | 2009011640 A2 | 22-01-2009 |
| GB 2446438 | A | 13-08-2008 | NONE | | |
| US 2011009105 | A1 | 13-01-2011 | NONE | | |
| EP 1184937 | A1 | 06-03-2002 | BR | 0103159 A | 02-04-2002 |
| | | | CA | 2351817 A1 | 09-02-2002 |
| | | | EP | 1184937 A1 | 06-03-2002 |
| | | | JP | 2002064427 A | 28-02-2002 |
| | | | US | 6421005 B1 | 16-07-2002 |

EPO FORM P0459

For more details about this annex : see Official Journal of the European Patent Office, No. 12/82

22

**EP 2 575 388 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *TR 36.927 V10.0.0,* June 2011